# EUROPÄISCHE PATENTANMELDUNG

(11) **EP 3 293 867 A1**
(43) Veröffentlichungstag der Anmeldung: **14.03.2018**
(21) Anmeldenummer: 16188289.9
(22) Anmeldetag: 12.09.2016
(51) Int. Cl.: H02K 15/04, H02K 15/06

(54) **AUTOMATISIERUNGSSYSTEM ZUR HERSTELLUNG EINER STÄNDERWICKLUNG**

(71) Anmelder: Siemens Aktiengesellschaft, 80333 München (DE)
(72) Erfinder: Evers, Christoph, 46236 Bottrop (DE); Grau Sorarrain, Esteban, 40217 Düsseldorf (DE); Joswig, Ana, 44227 Dortmund (DE); Lehmann, Christoph, 47506 Neukirchen-Vluyn (DE); Steins, Hendrik, 45134 Essen (DE); Werkmeister, Stephan, 46286 Dorsten (DE); Wysgol, Markus, 44789 Bochum (DE)

(57) **Zusammenfassung**

Die Erfindung betrifft ein Automatisierungssystem (1) zur Herstellung einer Ständerwicklung für einen elektrischen Generator, wobei der Einbau der Ständerstäbe automatisiert mittels einer Transporteinheit (2), einer Blechpaketeinheit (6) mit Böcken (7), die zum Drehen eines Blechpakets (5) ausgebildet ist und einer Positioniereinheit, die zum Ablegen eines Ständerstabes in eine Nut (10) eines Blechpakets (5) ausgebildet ist, realisiert ist.

## Beschreibung

Die Erfindung betrifft ein Automatisierungssystem zur Herstellung einer Ständerwicklung für eine elektrodynamische Maschine, insbesondere elektrischer Generator.

Desweiteren betrifft die Erfindung ein Verfahren zur Herstellung einer Ständerwicklung für eine elektrodynamische Maschine, insbesondere elektrischer Generator.

Eine elektrodynamische Maschine, wie zum Beispiel ein Turbogenerator umfasst im Wesentlichen einen drehbar gelagerten Läufer mit einer Läuferwicklung und einen um den Läufer angeordneten Stator mit einer Statorwicklung. Im Betrieb strömt ein elektrischer Strom durch die Läuferwicklung und erzeugt dadurch ein veränderbares magnetisches Feld, das in der Statorwicklung eine Spannung induziert.

Bei der Herstellung der Ständerwicklung werden Leiterstäbe in sogenannte Nuten in einem Blechpaket angeordnet. Dieser Einbau der Ständerwicklung erfolgt in den im Blechpaket vorgesehenen Nuten.

Der Einbau der Ständerwicklung in die vorgesehenen Nuten erfolgt durch Handarbeit.

Aufgabe der Erfindung ist es, ein Automatisierungssystem und ein Verfahren anzugeben, mit dem eine Ständerwicklung schneller gefertigt werden kann.

Gelöst wird diese Aufgabe durch ein Automatisierungssystem zur Herstellung einer Ständerwicklung für eine elektrodynamische Maschine, insbesondere elektrischer Generator, umfassend eine Transporteinheit, um einen Ständerstab von einem Lager zu einer Stabpresse sowie von der Stabpresse zu einem Blechpaket zu transportieren, eine Blechpaketeinheit mit Böcken, wobei die Blechpaketeinheit zum Drehen eines Blechpakets ausgebildet ist, und eine Positioniereinheit, die zum Ablegen eines Ständerstabes in eine Nut eines Blechpakets ausgebildet ist.

Desweiteren wird die Aufgabe gelöst durch ein Verfahren zur Herstellung einer Ständerwicklung für eine elektrodynamische Maschine, insbesondere elektrischer Generator, wobei mit einer Transporteinheit Leiterstäbe von einem Lager zu einer Stabpresse transportiert werden und von der Stabpresse zu einem Blechpaket transportiert werden, wobei mit einer Blechpaketeinheit mit Böcken ein Blechpaket gedreht wird, so dass in einer Nut ein Leiterstab durch eine Positioniereinheit eingebracht wird.

Mit der Erfindung wird demnach das Ziel verfolgt, Roboter einzusetzen, die die traditionell mit Handarbeit ausgeführten Vorgänge ersetzen sollen. Dies bringt eine Zeit- und Kostenersparnis, wobei die Prozessautomatisierung eine Steuerung und Sicherung der Qualität aufgrund der Reduzierbarkeit und der Fehlervermeidung nach sich zieht.

Vorteilhafte Weiterbildungen sind in den Unteransprüchen angegeben.

Der Einbau der Leitungsstäbe und des Blechpakets erfolgt folgendermaßen:
Das Blechpaket, in dem die Leitungsstäbe einzubauen sind, wird auf eine Blechpaketeinheit mit Böcken abgelegt, wobei die Blechpaketeinheit zum Drehen eines Blechpakets ausgebildet ist. Eine Transporteinheit wird derart ausgebildet, dass sie Ständerstäbe von einem Lager zu einer Stabpresse sowie von der Stabpresse zu einem Blechpaket transportieren kann. Desweiteren ist eine Positioniereinheit vorgesehen, die zum Ablegen des Ständerstabes in eine Nut eines Blechpakets ausgebildet ist.

Vorteilhafterweise umfasst die Transporteinheit eine Schiene, wobei auf dieser Schiene ein Roboter beweglich angeordnet ist und der Roboter zum Bewegen von Ständerstäben ausgebildet ist.

In einer weiteren vorteilhaften Weiterbildung weist die Blechpaketeinheit zumindest einen Bock zum Ablegen eines Blechpakets auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine schematische Ansicht des Automatisierungssystems,
- Figur 2: eine Seitenansicht der Positioniereinheit,
- Figur 3: eine Seitenansicht der Transporteinheit.

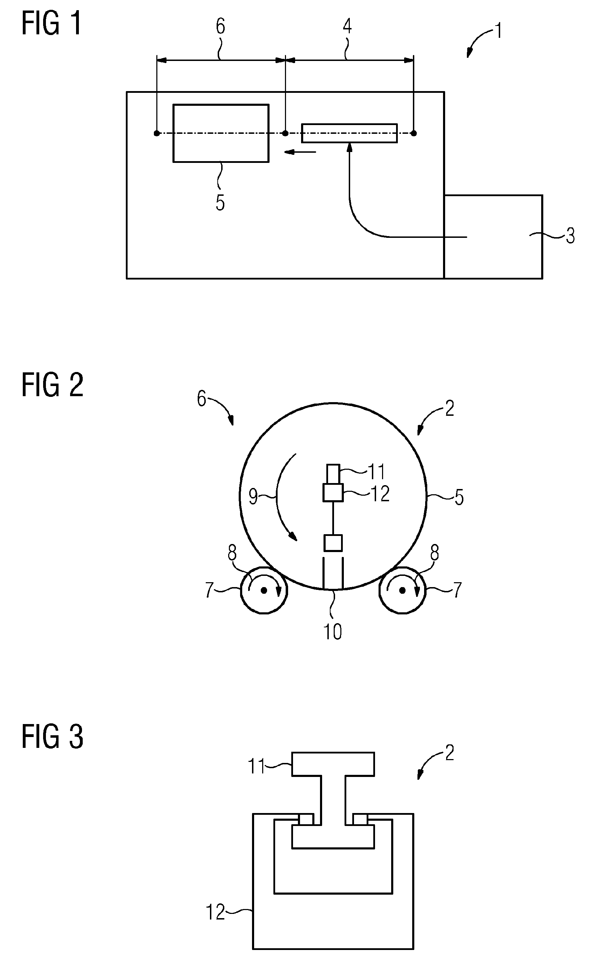

Figur 1 zeigt in schematisierter Weise ein Automatisierungssystem 1, das zur Herstellung einer Ständerwicklung für eine elektrodynamische Maschine, insbesondere elektrischer Generator ausgebildet ist. Das Automatisierungssystem 1 umfasst eine Transporteinheit 2, die in den Figuren 2 und 3 in schematisierter Weise dargestellt ist. Die Transporteinheit 1 ist zum Transportieren eines Ständerstabs von einem Lager 3 zu einer Stabpresse 4 sowie von der Stabpresse 4 zu einem Blechpaket 5. Das Blechpaket 5, in dem die Ständerstäbe einzubauen sind, wird auf eine Blechpaketeinheit 6 mit Böcken 7 abgelegt. Die Böcke 7 sind zum Abstützen des Blechpakets 5 ausgebildet und weisen nicht näher dargestellte Schrittmotoren auf, mit denen das Blechpaket 5 gedreht werden kann. In der Figur 2 sind in schematisierter Weise zwei Böcke 7 dargestellt, wobei durch die Pfeile 8 eine Rotationsrichtung dargestellt ist, die durch die nicht näher dargestellten Schrittmotoren erfolgt.

Durch eine Drehung des Blechpakets 5, was durch die weitere Rotationsrichtung 9 dargestellt ist, kann eine Nut 10 in eine 6-Uhr-Position angeordnet werden.

Nachdem das Blechpaket 5 an einer vorgeschriebenen Stelle angeordnet ist, wird ein Rahmen mit Schienen 11 innerhalb des Blechpakets 5 angeordnet. Die Montage des Rahmens mit den Schienen 11 erfolgt dabei im Blechpaket 5 noch in Längsrichtung. Auf die Schiene 11 werden zwei Roboter 12 mit Roboterarmen montiert. Eine Darstellung der Schiene 11 mit den Robotern 12 ist in der Figur 3 zu sehen. Die Roboter 12 werden mit einem Messsystem ausgerüstet, damit sie sowohl ihre Position im Raum vermessen können als auch einen jeweiligen Ständerstab identifizieren können. Somit ist der Roboter 12 derart ausgebildet, dass dieser seine Position identifiziert und die genaue Einbaulage eines Ständerstabes identifizieren kann.

Die Länge des Rahmens und der Schienen 11 ist variabel, so dass Blechpakete unterschiedlicher Länge hergestellt werden können.

Die Transporteinheit 2 ist derart ausgebildet, dass diese Ständerstäbe aus einem Lager 3 zu einer Stabpresse 4 transportiert. Es werden Barcodes an den Ständerstäben angebracht, in denen sämtliche Informationen zum jeweiligen Ständerstab enthalten sind, wie zum Beispiel die Maße, die Position usw.. In der Stabpresse 4 werden die Leitungsstäbe gepresst, was in den Figuren 1 bis 3 nicht näher dargestellt ist. Nach der Stabpresse 4 bewegt die Transporteinheit 2 den Ständerstab zu dem Blechpaket 5.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Automatisierungssystem (1) zur Herstellung einer Ständerwicklung für eine elektrodynamische Maschine, insbesondere elektrischer Generator,
umfassend
eine Transporteinheit (2),
um einen Ständerstab von einem Lager (3) zu einer Stabpresse (4) sowie
von der Stabpresse (4) zu einem Blechpaket (5) zu transportieren,
eine Blechpaketeinheit (6) mit Böcken (7),
wobei die Blechpaketeinheit (6) zum Drehen eines Blechpakets (5) ausgebildet ist, und
eine Positioniereinheit,
die zum Ablegen eines Ständerstabes in eine Nut (10) eines Blechpakets (5) ausgebildet ist.

2. Automatisierungssystem (1) nach Anspruch 1,
wobei
die Transporteinheit (2) eine Schiene (1) umfasst und auf dieser Schiene (11) ein Roboter (12) beweglich angeordnet ist,
wobei der Roboter (12) zum Bewegen von Ständerstäben ausgebildet ist.

3. Automatisierungssystem (1) nach Anspruch 2,
wobei der Roboter (12) mit einem Messsystem ausgestattet ist,
wobei mit dem Messsystem die Position des Roboters (12) im Raum ermittelt werden und einen Ständerstab identifiziert werden kann.

4. Automatisierungssystem (1) nach Anspruch 1, 2 oder 3, wobei die Blechpaketeinheit (6) zumindest einen Bock (7) zum Ablegen eines Blechpakets (5) aufweist.

5. Automatisierungssystem (1) nach Anspruch 4,
wobei die Böcke (7) mittels Schrittmotoren zum Drehen ausgebildet sind.

6. Automatisierungssystem (1) nach einem der vorhergehenden Ansprüche,
wobei das Automatisierungssystem (1) derart ausgebildet ist, dass Blechpakete (5) in unterschiedlicher Länge bearbeitet werden können.

7. Verfahren zur Herstellung einer Ständerwicklung für eine elektrodynamische Maschine, insbesondere elektrischer Generator,
wobei mit einer Transporteinheit (2) Leiterstäbe von einem Lager (3) zu einer Stabpresse (4) transportiert werden und von der Stabpresse (4) zu einem Blechpaket (5) transportiert werden,
wobei mit einer Blechpaketeinheit (6) mit Böcken (7) ein Blechpaket (5) gedreht wird, so dass in einer Nut (10) ein Leiterstab durch eine Positioniereinheit eingebracht wird.
